# FASCICULE DE BREVET EUROPEEN

(11) **EP 1 814 684 B1**
(45) Date de publication et mention de la délivrance du brevet: **28.12.2011**
(21) Numéro de dépôt: 05809417.8
(22) Date de dépôt: 14.10.2005
(51) Int. Cl.: B23C 5/22

(54) **ENSEMBLE A BRIDAGE DE PLAQUETTE**
SPITZENFESTKLEMMANORDNUNG
TIP FLANGING ASSEMBLY

(30) Priorité: 14.10.2004 FR 0410846
(43) Date de publication de la demande: 08.08.2007
(73) Titulaire: SAFETY, 92517 Boulogne Billancourt Cedex (FR)
(72) Inventeur: FOUQUER, Richard, F-37540 Saint Cyr sur Loire (FR)
(74) Mandataire: Hirsch & Associés
(86) Numéro de dépôt international: PCT/FR2005/002549
(87) Numéro de publication internationale: WO 2006/040484

(56) Documents cités:
- EP-A2- 0 052 585
- EP-A2- 0 247 011
- SU-A1- 1 143 518
- US-A- 5 199 828
- "SCHNELLWECHSEL-SPANNSYSTEM FUR DAS GEWINDEDREHEN" VDI Z, VDI VERLAG, DUSSELDORF, DE, vol. 138, no. 6, 1 juin 1996 (1996-06-01), page 59, XP000593949 ISSN: 0042-1766
- PATENT ABSTRACTS OF JAPAN vol. 1999, no. 04, 30 avril 1999 (1999-04-30) -& JP 11 000813 A (TOSHIBA TUNGALOY CO LTD), 6 janvier 1999 (1999-01-06)

## Description

La présente invention concerne le bridage d'une plaquette de coupe contre une surface de pose ménagée sur un porte-outil.

De façon classique, une fraise comporte un logement dont le fond présente un trou.taraudé recevant une vis traversant un passage à bord lisse ménagé dans l'épaisseur de la plaquette. Comme le serrage doit être relativement puissant, pour résister aux vibrations susceptibles de provoquer un dévissage, le trou est relativement profond et avec un pas relativement faible pour présenter une pente d'avance axiale de même très faible. De la sorte, les surfaces coopérantes des filets de la vis et du trou sont quasiment à orientation axiale, de sorte que toute force axiale parasite s'exerce sensiblement perpendiculairement sur les filets et, l'effet de coin étant ainsi minime, la vis n'a pas tendance à se desserrer.

L'utilisateur doit donc, à chaque changement de plaquette, effectuer un grand nombre de tours de dévissage, pour libérer la plaquette usée, par dévissage total de la vis, puis il effectue l'opération inverse. Ceci représente une perte de temps et, en outre, il y a un risque pour qu'il positionne mal la plaquette ou la vis, ce qui entraîne en général une destruction de la plaquette et parfois du porte-outil.

La demanderesse a aussi détecté qu'il se pose deux autres problèmes, thermiques, liés au maintien du bridage par la vis, du fait que, en utilisation, l'échauffement de la plaquette dilate nettement plus la vis, en acier, que la plaquette, en carbure. Un premier problème thermique est lié au fait que la tête de la vis remonte, par dilatation axiale par rapport à son corps prisonnier du trou, et cela risque d'affecter le placage de la plaquette contre le fond du logement. La demanderesse a aussi détecté un second problème thermique, en observant que, lors du refroidissement qui suit, la vis reprenait une position correspondant à un léger supplément de vissage, et que l'accroissement ainsi induit de la pression du dessous conique de la tête de vis sur le pourtour de même forme du trou provoquait, au fil de tels cycles thermiques répétés, une fissuration de la plaquette, partant radialement du trou.

Par ailleurs, EP-A-0 247 011 décrit un dispositif pour brider un insert de coupe positif sur un porte-outil au moyen d'une vis de serrage engagée dans un trou formé dans le porte-outil, suivant la préambule de la revendication 1. La vis de serrage présente une tête qui est de diamètre inférieur au diamètre d'un trou formé au travers de l'insert de coupe. L'axe du trou formé dans l'insert de coupe est parallèle au plan d'extension de la paroi latérale limitant la surface de pose.

Cependant, l'insert de coupe décrit dans EP-A-0 247 011, positif, n'est pas réversible.

La présente invention vise à apporter une solution ou au moins atténuer les inconvénients liés à au moins l'un des trois problèmes ci-dessus.

Par ailleurs, il est connu de EP-A-0 052 585 un outil de coupe comportant un porte-outil et un insert de coupe reçu dans un logement prévu à cet effet et muni d'un trou. Selon ce document, l'insert de coupe est bridé par une vis de serrage positionnée dans le trou formé dans l'insert et vissée dans le porte-outil. La tête de la vis de serrage est excentrique par rapport au reste de la vis et présente une section différente de celle du trou dans l'insert de coupe. Selon un premier mode de réalisation décrit dans EP-A-0 052 585, la vis est vissée dans un trou, formé dans le porte-outil, qui s'étend perpendiculairement à la surface sur laquelle repose l'insert de coupe. Cependant, selon un second mode de réalisation préféré de EP-A-0 052 585, le trou dans le porte-outil peut s'étendre obliquement, vers l'extrémité à la fois inférieure et extérieure du porte-outil.

Il est également connu de JP-A-11 000 813 une plaquette de coupe bridée contre le fond d'un logement par une vis, plongeant en oblique depuis le fond du logement.

Enfin, EP-A-0 037 554 décrit un outil de coupe comportant un porte-outil avec un logement pour la réception d'une plaquette de coupe munie d'un trou central et avec un trou pour recevoir une vis de serrage à symétrie de révolution pour le bridage de la plaquette. Le trou comprend un tronçon supérieur dont l'axe est perpendiculaire à la surface recevant la plaquette de coupe, et un tronçon inférieur dont l'axe est incliné, vers l'extrémité extérieure du porte-outil, de quelques degrés par rapport à l'axe du tronçon supérieur.

La présente invention concerne tout d'abord un ensemble à bridage, comportant une plaquette de coupe et un dispositif de bridage de la plaquette contre une surface de pose ménagée sur un porte-outil, le dispositif comportant un coulisseau comprenant un tronçon de guidage prévu pour être monté coulissant dans un trou de guidage ménagé dans la surface de pose et un tronçon de bridage comprenant une tête de bridage comportant un relief latéral de bridage de forme agencée pour présenter une surface de placage, au moins partiellement tournée vers le tronçon de guidage, pour buter contre une surface de siège opposée, associée à une cavité de la plaquette débouchant dans au moins une face de pose de la plaquette et agencée pour loger le tronçon de bridage, afin de plaquer la plaquette sur la surface de pose lorsque la plaquette et le coulisseau sont mutuellement disposés selon une position mutuellement relative de bridage, la cavité de la plaquette présentant un gabarit de passage, le long d'un passage d'accès pour la tête depuis la face de pose jusqu'à la surface de siège, associée à exclusivement un seul côté de la cavité, le gabarit de passage variant selon une forme adaptée, par rapport à un gabarit d'encombrement du relief latéral de bridage, pour que le gabarit de passage soit incompatible avec le gabarit d'encombrement lorsque la plaquette et le coulisseau sont disposés selon la dite position mutuellement relative de bridage, et de forme adaptée pour que le gabarit de passage soit compatible avec le gabarit d'encombrement lorsque la plaquette et le coulisseau sont disposés selon au moins une autre position mutuellement relative, de libération de la plaquette, ensemble caractérisé en ce que le trou de guidage s'enfonce depuis la surface de pose dans le porte-outil selon une direction d'extension dirigée en oblique vers un plan d'extension d'une paroi latérale, laquelle paroi latérale limite la surface de pose, en ce que la cavité de la plaquette présente une forme symétrique par rapport à un plan médian à mi-épaisseur de la plaquette, en ce que la cavité débouche aussi, par un autre passage ayant le dit gabarit de passage, dans une face opposée à la dite face de pose et en ce que la cavité comporte une autre surface de siège pour brider la plaquette réversible en position retournée.

Ainsi, lorsque la plaquette est plaquée sur la surface de pose dans une position cadrée déterminée par la dite position relative, et que la tête du coulisseau est donc prisonnière de la cavité de la plaquette, c'est en fait la surface de pose qui assure le maintien dans la position relative voulue. En effet, la plaquette présente avec celle-ci un certain coefficient de frottement et/ou est cadrée par une paroi latérale délimitant un logement. Pour le bridage, il suffit donc du seul appui de pacage exercé sur le dit côté de la cavité. Toute surface de côté de la cavité, latéralement opposée à la surface de siège, reste totalement libre et il en est de même pour toute surface de côté de la tête de bridage, opposée au relief latéral de bridage. De ce fait, la plaquette est uniquement pincée entre la mâchoire, constituée par le relief latéral de bridage, et le fond du logement, c'est-à-dire qu'elle ne subit qu'une contrainte de pression. La plaquette ne subit ainsi aucune contrainte d'écartèlement de son trou de passage, qui serait susceptible de fissurer la paroi de celui-ci.

Lorsque le coulisseau est commande à la remontée pour débrider la plaquette, celle-ci se libère donc de la surface de pose et peut ainsi changer de position relative par rapport au coulisseau, pour prendre la position de libération, libérant la tête du coulisseau et libérant de ce fait la plaquette. Selon la forme de réalisation, l'un des deux éléments, parmi la plaquette et le coulisseau, atteint automatiquement l'orientation relative voulue par rapport à l'autre pour un désaccouplement automatiquement, ou bien l'utilisateur intervient. Dans tous les cas, il est donc inutile de démonter totalement le coulisseau.

La cavité est prévue fonctionnellement symétrique pour que la plaquette soit réversible dessus / dessous.

La cavité peut aussi déboucher dans une face supérieure, opposée à la face de pose, pour ménager un passage supérieur, d'accès à la tête de bridage par un tournevis ou une clé de manoeuvre, si la tête de bridage constitue aussi une tête de manoeuvre d'entraînement. Le cas échéant, le passage supérieur permet d'y passer le tronçon de guidage, pour alors une manoeuvre classique de montage.

En outre, du fait que le trou de guidage s'enfonce selon une direction dirigée en oblique vers un plan d'extension d'une paroi latérale limitant la surface de pose, la plaquette peut être bridée entre, d'une part, une ligne d'arête fixe définie par le bas de la paroi latérale délimitant ainsi un logement et, d'autre part, la surface de placage appartenant au coulisseau, qui constitue donc une mâchoire opposée à l'arête fixe. Comme le plan de la paroi latérale et la direction d'extension du trou de guidage forment un V, un léger débridage de la plaquette lui permet de remonter sur la branche du V définie par le coulisseau, de sorte que la plaquette se libère du contact avec la paroi latérale et peut ainsi prendre l'orientation voulue pour se libérer, par translation, rotation ou basculement. On notera que la forme en V ci-dessus n'implique pas le fond du logement, c'est-à-dire qu'il n'est pas exclu que le plan de la paroi latérale soit incliné sur une normale au fond, la direction d'extension du trou de passage pouvant alors être oblique ou bien parallèle à une telle normale au fond.

Dans une forme de réalisation particulière, le gabarit de passage et le gabarit d'encombrement sont agencés pour que la dite autre position mutuellement relative soit atteinte par un basculement de la plaquette relativement au coulisseau.

Il s'agit donc d'un basculement relatif, c'est-à-dire que la plaquette peut basculer par rapport à la surface de pose, le coulisseau pouvant conserver, en position relevée, de débridage, l'orientation qu'il avait en position de bridage, ou bien la plaquette peut conserver son orientation parallèle à la surface de pose et alors le coulisseau, lors de sa remontée partielle hors du trou de guidage, tourne autour d'un axe géométrique, tel une vis, pour libérer son relief latéral de bridage vis-à-vis de la surface de placage, par cette rotation d'un certain angle. En variante, le trou de guidage et le coulisseau s'étendent en arc de cercle, de sorte que l'orientation globale du coulisseau bascule lors de cette remontée, et ainsi le relief latéral de bridage peut être disposé pour qu'il bascule en tendant à s'aligner sur la direction d'extension du passage, pour devenir compatible avec celui-ci.

Dans une autre forme de réalisation, le gabarit de passage et le gabarit d'encombrement sont agencés pour que la dite autre position mutuellement relative soit atteinte par une rotation relative de la plaquette, par rapport au coulisseau, dans un plan sensiblement parallèle à la face de pose.

Le relief latéral de la tête présente donc un gabarit non circulaire en vue de dessus parallèlement à la surface de pose, et la rotation ci-dessus de la plaquette rompt son cadrage avec la surface de pose pour établir un autre cadrage, dans lequel le gabarit d'encombrement est compatible avec le gabarit de passage.

En pareil cas, un relief latéral, d'entraînement du coulisseau, et un relief complémentaire du porte-outil peuvent être agencés pour que, par remontée partielle du coulisseau d'au moins une hauteur déterminée par rapport au trou de guidage, le coulisseau pivote sur lui-même d'un certain angle qui amène le gabarit d'encombrement en une orientation le rendant compatible avec le gabarit de passage.

Il s'agit en pareil cas d'un coulisseau à tronçon de guidage rectiligne, par exemple de type vis, pour pouvoir tourner axialement.

Dans encore une autre forme de réalisation, le gabarit de passage et le gabarit d'encombrement sont agencés pour que la dite position de libération soit atteinte par une translation de la plaquette, relativement au coulisseau, dans un plan parallèle à la surface de pose.

Le passage comporte donc, à l'opposé d'un côté comportant la surface de siège, un évidement permettant de loger la tête, de sorte qu'un recul radial de la surface de siège est alors possible, sur une distance suffisante pour sortir de l'emprise, c'est-à-dire du surplomb, du relief latéral portant la surface de placage. L'"accrochage" de la surface de placage sur la surface de siège étant ainsi rompu, il est donc facile de prévoir que le gabarit du passage autorise alors la sortie de la tête et bien évidemment sa rentrée dans une plaquette neuve orientée de même.

On peut en particulier songer à un dit passage, coudé, comportant un tronçon d'embouchure "vertical" aboutissant à une cavité en forme de tunnel "horizontal" à un certain niveau dans l'épaisseur de la plaquette. Une fois montée dans la cavité, par un mouvement axial dans le tronçon d'embouchure, la tête du coulisseau peut être repoussée latéralement vers le fond du tunnel grâce au fait que le tronçon d'embouchure comporte une fente latérale étroite, autorisant le passage, par translation radiale, d'un col portant la tête mais bloquant toute redescente de celle-ci. Le tunnel horizontal et la fente située dessous présentent ainsi une section globalement en queue d'aronde, le tunnel horizontal présentant un bord inférieur constituant une piste interne de dit siège, recevant le dessous de la tête du coulisseau.

Pour répartir la charge, la surface de siège s'étend de préférence sur un arc de pourtour partiel du passage de la cavité, n'excédant pas 180 degrés afin de laisser toute liberté de flexion à la tête de bridage. L'appui de blocage sur un tel arc peut être prévu sur une seule zone ou bien être réparti sur plusieurs zones séparées, par exemple deux zones d'appui mutuellement décalés de 90 degrés pour bien caler la plaquette selon les directions correspondantes. Toutefois, si la plaquette comporte une pluralité d'arêtes de coupe et peut donc être montée selon plusieurs orientations azimutales, la surface de siège peut être prévue en autant de secteurs répartis, ou même constituer une piste entourant totalement la cavité, sachant que, conformément à l'invention, seul un secteur est fonctionnel pour chaque position offerte. Compte tenu du fait que, selon l'invention, il n'y a pas nécessité de disposer d'une zone de contre-appui sur la plaquette, qui serait latéralement opposée à la surface de siège et serait de forme spécifique à cet effet, il est donc possible de prévoir qu'une telle zone opposée, fonctionnellement libre lors d'un bridage de la plaquette selon une position azimutale déterminée, ait une forme prévue pour servir de surface de siège lorsque la plaquette est montée selon une autre orientation azimutale.

Le gabarit de passage peut ainsi être prévu pour que la libération de la tête s'effectue en déplaçant, selon un mouvement relatif, la surface de placage vers un côté opposé au dit arc, pour qu'elle ne surplombe plus la surface de siège qui retient prisonnière la tête, ceci par une translation radiale vis-à-vis du passage ou bien un basculement relatif de la plaquette, les gabarits respectifs étant alors compatibles.

La paroi latérale peut s'étendre globalement en oblique de façon évasée par rapport à une normale à la surface de pose.

Il peut s'agir d'une paroi latérale à profil montant rectiligne ou courbe, voire encore étagé.

Dans une forme de réalisation particulière, le trou de guidage et le coulisseau s'étendent en arc de cercle.

Dans la mesure où le trou de guidage et le coulisseau ont des sections transversales mutuellement ajustées, le coulisseau a donc exclusivement un mouvement de translation avec basculement de son orientation globale, ce basculement pouvant être prévu selon un angle amenant l'adaptation voulue entre les deux gabarits associés.

Le gabarit de passage peut comporter un tronçon d'étranglement. Le passage peut ainsi par exemple comporter deux tronçons opposés d'embouchure coniques, ouverts vers l'extérieur, et la surface de siège se trouve sur l'une des surfaces coniques constituant les versants de l'étranglement, voire en deux exemplaires sur respectivement les deux versants, si la plaquette est réversible.

Le tronçon de guidage peut comporter des moyens de commande d'entraînement, c'est-à-dire de manoeuvre.

Il peut par exemple s'agir d'une extrémité, fendue ou à pans, de vis constituant le coulisseau, extrémité opposée à la tête, c'est-à-dire que le trou de guidage est traversant, pour un accès axial ou latéral à l'extrémité de commande d'entraînement.

Le tronçon de guidage comporte avantageusement un relief latéral, de blocage du coulisseau en position de bridage, agencé pour coopérer avec un relief complémentaire du porte-outil.

Un tel relief latéral peut être facilement couplé à un engrenage d'entraînement d'un relief axial du coulisseau.

Le relief latéral de blocage du coulisseau en position de bridage est par exemple une encoche latérale agencée pour recevoir une extrémité, de commande de manoeuvre et de blocage en position, d'une vis de manoeuvre montée dans un trou taraudé et agencée pour enfoncer le coulisseau dans le trou de guidage par appui sur un flanc de l'encoche.

La vis de manoeuvre peut présenter une direction d'extension inclinée par rapport à une direction d'extension du trou de passage, cette condition n'étant toutefois pas nécessaire dans la mesure où, en utilisation, le coulisseau ne nécessite pas d'être totalement sorti du trou de guidage. Il peut donc être prévu que le trou taraudé pour la vis de manoeuvre soit d'axe parallèle à la direction d'extension du trou de guidage pour le coulisseau, dans la mesure où le dispositif aura été prévu pour permettre le montage initial avec couplage. Par exemple, la vis de manoeuvre peut présenter un tronçon d'extrémité, a priori lisse, séparé du reste de la vis par une gorge diamétrale, annulaire, ou une simple encoche latérale, le coulisseau ayant un même genre de forme pour que son tronçon d'extrémité puisse être logé dans la gorge de la vis, tandis le tronçon d'extrémité de la vis de manoeuvre est lui-même logé dans la gorge du coulisseau. En d'autres termes, et d'une façon plus générale, la vis de manoeuvre constitue une crémaillère en prise avec un relief latéral du coulisseau. Pour permettre la manoeuvre, le tronçon de guidage du coulisseau est lisse axialement, c'est-à-dire exempt de prise avec la paroi du trou de guidage. Le coulisseau et la vis sont ainsi couplés latéralement selon des orientations opposées, tête-bêche, la vis de manoeuvre constituant ainsi une sorte de molette en prise avec un flanc ou l'autre de l'encoche, ou en prise avec tout un tronçon du coulisseau fileté à cet effet, les filets de celui-ci constituant ainsi une pluralité de telles encoches.

La surface de placage et la surface de siège sont avantageusement deux rampes respectives prévues pour un glissement mutuel lors du coulissement du coulisseau entrant dans le trou de guidage, afin qu'un tronçon libre du coulisseau, portant la tête de bridage, soit repoussé en flexion et reçu dans un évidement latéral de la cavité, ménagé à cet effet d'un côté opposé à la surface de siège.

La cavité forme avantageusement, avec l'évidement latéral, un logement de largeur d'au moins 1,25 fois, de préférence 1,5 fois, et de façon plus préférée 2 fois, une valeur de largeur de la tête de bridage.

Avantageusement, pour assurer un maintien sensiblement constant d'une force de bridage lorsque la plaquette se trouve chauffée par le frottement sur une pièce à usiner, la surface de placage et la surface de siège en rampe sont orientées, en position de bridage, selon une direction coupant un axe longitudinal virtuel du coulisseau en un point axial situé sensiblement dans une surface radiale virtuelle de sommet du tronçon de guidage, portant la tête de bridage.

Comme le tronçon de guidage est bloqué dans le trou de guidage, la dilatation naturelle, isotrope, de la tête de bridage s'effectue selon une homothétie partant du point axial. Les deux rampes se trouvent donc alignées avec la direction locale de dilatation volumique, de sorte qu'elles glissent l'une sur l'autre, sans tendre à s'écarter ou à s'écraser excessivement.

La présente invention sera mieux comprise à l'aide de la description suivante d'une forme de réalisation d'un porte-outil à dispositif de bridage de plaquette de coupe selon l'invention, en référence au dessin annexé, sur lequel :
la figure 1 est une vue partielle en perspective d'une fraise constituant un porte-outil selon l'invention et comportant une pluralité de logements pour des plaquettes de coupe,
la figure 2 est une vue en section selon l'épaisseur de l'un des logements, montrant une plaquette de coupe maintenue en position de bridage par une vis de bridage,
la figure 3 est homologue à la figure 2, la plaquette étant en position de débridage, et
les figures 4 et 5 illustrent schématiquement une variante dans laquelle le coulisseau est exempt de filetage d'entraînement, la figure 4 représentant la plaquette en vue de dessous, avec son passage, et le coulisseau en perspective, et la figure 5 étant une vue en coupe axiale selon le passage de la plaquette.

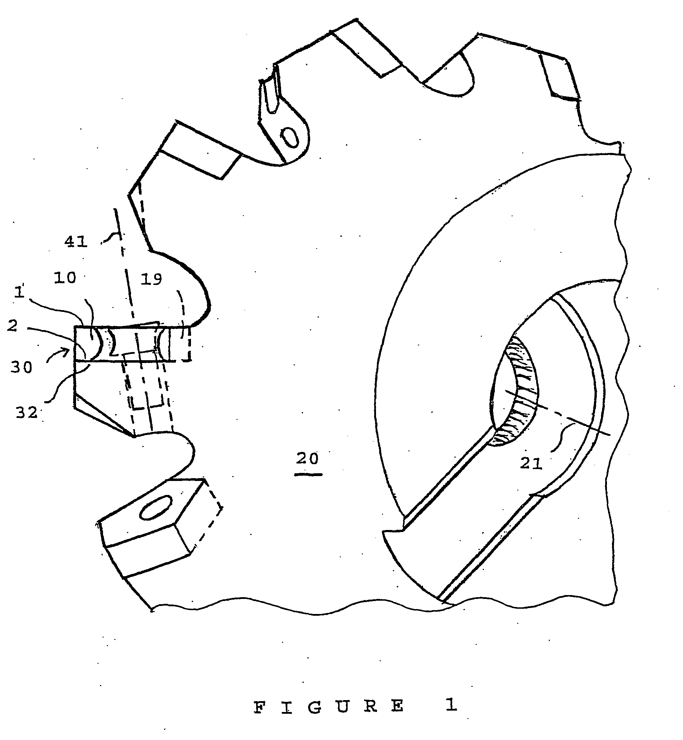

La figure 1 représente partiellement une fraise 20, d'axe général de rotation 21, en forme de couronne, ici vue en oblique de l'arrière, comportant, à une extrémité de sommet, une pluralité de dents comportant chacune un logement 30 à surface de fond 32 plane s'étendant dans un plan sensiblement axial et radial par rapport à l'axe général 21. Chaque surface de fond 32 sert de surface de pose pour une face principale inférieure 2 d'une plaquette de coupe 10, opposée à une face principale supérieure 1 sensiblement parallèle. Les faces principales 1 et 2 sont reliées par une pluralité d'ici cinq faces latérales de flanc ici identiques, comme par exemple la face latérale de flanc 19, définissant autant d'arêtes de coupe, utilisables successivement, avec l'une au moins des faces principales 1 et 2.

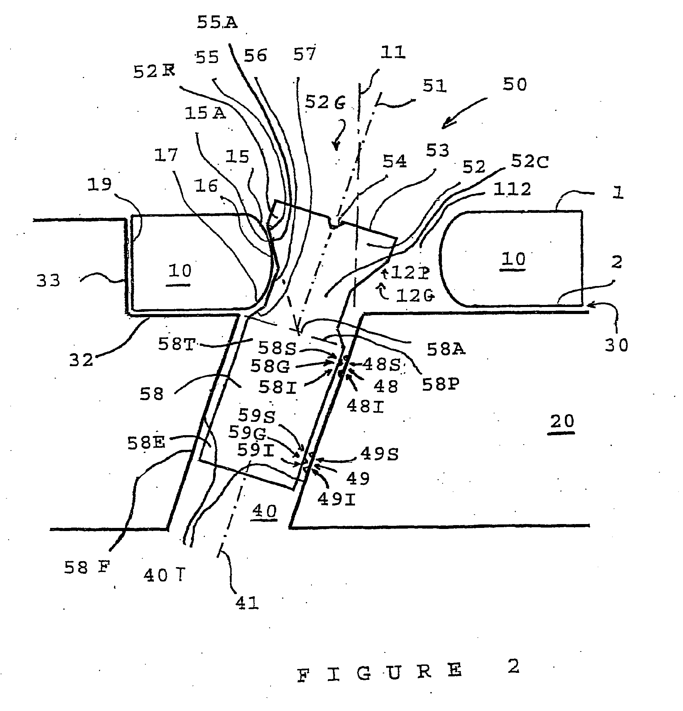

La figure 2 est une vue selon une section d'un des logements 30, dans un plan radial de la fraise 20, montrant la plaquette de coupe 10 correspondante et un coulisseau de bridage associé, qui est ici une vis de bridage 50, d'axe géométrique 51, logée dans un trou taraudé de guidage 40 ménagé dans la surface de fond 32 et d'axe, géométrique, de guidage 41 ici confondu avec l'axe de vis 51.

La vis de bridage 50 comporte, en succession, une tête de bridage 52, ici cylindrique à relief latéral de pourtour de bridage 52R, à surface sommitale 53 comportant une fente, diamétrale, de manoeuvre 54, puis un col 52C formant une gorge constituée par un flanc supérieur 55 formant un dessous sensiblement tronconique du relief de pourtour 52R, un tronçon cylindrique de fond de gorge 56 et un flanc inférieur 57, sensiblement tronconique, et enfin un tronçon de corps de guidage 58, à filetage 58F, logé dans le trou de guidage 40 et en prise avec les filets d'un taraudage 40T de celui-ci. Le flanc inférieur 57 est symétrique du flanc supérieur 55 par rapport à un plan médian à mi-épaisseur de la plaquette 10, afin de pouvoir aussi monter la plaquette 10 en position retournée. Le flanc inférieur 57 n'est pas fonctionnel dans la position représentée, c'est-à-dire que, pour une plaquette 10 qui ne serait pas réversible, il pourrait être remplacé par un tronçon conique, selon un angle de valeur et signe quelconques, ou non conique, servant à surhausser la tête de bridage 52.

Pour la commodité de l'exposé présenté ci-après, le tronçon de guidage 58 est considéré comme étant constitué par deux tronçons filetés, à savoir un tronçon d'extrémité libre 58E, inférieur, opposé à un tronçon supérieur 58T, limité par un plan supérieur radial virtuel constituant la limite avec le col 52C et comportant un point axial 58P, situé sur l'axe de vis 51.

La référence 58G désigne, dans le filetage 58F, un filet sommital, de position axiale supérieure, du tronçon supérieur 58T, présentant un flanc supérieur 58S, c'est-à-dire tourné quelque peu vers la tête de bridage 52, et un flanc inférieur 58I, tourné quelque peu vers le tronçon d'extrémité libre 58E. Les références 59G, 59S et 59I désignent de même respectivement, mais de façon globale, des filets, non tous représentés, du tronçon d'extrémité libre 58E et deux flancs, supérieur et inférieur, de celui-ci. Les filets 59G occupent toutefois une position axiale quelconque sur le tronçon d'extrémité libre 58E. Coopérant avec respectivement les filets 58G et 59G, le taraudage 40T comporte de même une rainure hélicoïdale sommitale 48 et des rainures hélicoïdales 49, à flancs supérieurs respectifs 48S et 49S, tournés quelque peu à l'opposé du logement 30, et à flancs inférieurs respectifs 481, 49I axialement en regard du flanc supérieur 48S, 49S associé.

Dans cet exemple, l'axe de guidage 41 s'étend en oblique, ici d'environ 10 degrés, par rapport à une normale à la surface de fond 32. La surface de fond 32 est ici associée à une paroi latérale 33, ici perpendiculaire à la surface de fond 32, pour un cadrage, plus précis et plus stable, en position voulue pour la plaquette de coupe 10 sur la surface de fond 32. Le trou de guidage 40 descend selon une direction dirigée en oblique vers un plan d'extension de la paroi latérale 33, formant ainsi un V avec elle.

Comme le montre la figure 1, l'axe de guidage 41 s'étend sensiblement selon une direction circonférentielle par rapport à l'axe général 21, la tête de bridage 52 étant quelque peu tournée à l'opposé de l'axe général 21, c'est-à-dire quelque peu vers l'ouverture d'une gorge entre deux des dents, gorge donc ouverte radialement vers l'extérieur, limitée par une face avant de la dent considérée, c'est-à-dire la face principale supérieure 1 (ou la surface de fond 32), et par la face arrière de la dent qui précède, la rotation s'effectuant dans le sens des aiguilles d'une montre. De la sorte, le prolongement de l'axe de guidage 41 est mieux dégagé de la partie arrière de la dent précédente, si bien qu'un tournevis peut facilement accéder à la fente de manoeuvre 54. Le chanfrein présente en outre une gorge en portion de cylindre selon l'axe de guidage 41, servant de berceau pour le tournevis.

La plaquette de coupe 10 comporte une cavité 12 formant un passage 12P d'axe de passage, géométrique, 11 ici sensiblement perpendiculaire aux plans des faces principales 1 et 2, reliant ici mutuellement les faces principales supérieure et inférieure 1 et 2, et débouchant dans une zone centrale de celles-ci. Le passage 12P présente ici une forme selon un gabarit de passage 12G du même genre qu'un gabarit d'encombrement 52G présenté par la tête de bridage 52 et le flanc supérieur 55, c'est-à-dire un tronçon d'embouchure supérieure à paroi de flanc supérieur 15 sensiblement tronconique, un tronçon intermédiaire d'étranglement à paroi sensiblement cylindrique 16 et un tronçon d'embouchure inférieure à paroi de flanc inférieur 17 sensiblement tronconique. Le terme gabarit désigne ainsi la forme et la taille d'une section transversale du passage 12P ou de la vis de bridage 50, ainsi que l'évolution de ces forme et taille le long de l'axe correspondant 11 ou 51, et compte tenu aussi de la position relative imposée entre ces deux éléments, fonction en particulier de l'inclinaison et des positions mutuelles entre ces axes.

Comme le montre la figure 2, le passage 12P est situé, dans la plaquette 10, de façon que, lorsque la face latérale de flanc 19, par exemple, est en appui sur la paroi latérale 33, la paroi de flanc supérieur 15, partiellement tournée vers l'embouchure supérieure, constitue un relief latéral de butée empêchant l'enfoncement de la tête de bridage 52 dans le trou 40, pour ainsi brider la plaquette 10. Précisément, une surface de siège 15A, appartenant à la paroi de flanc supérieur 15 et située du côté de la paroi latérale 33, sert de siège pour une zone de placage 55A appartenant au flanc supérieur 55 de la vis de bridage 50, partiellement tourné vers le tronçon de corps 58. La surface de fond 32 et la paroi latérale 33 délimitent ainsi une ligne d'arête en coin à laquelle est sensiblement diagonalement opposée, en ce qui concerne la moitié de gauche de la plaquette 10, la zone de placage 55A, mobile vers la surface de fond 32. La zone de placage 55A représente une zone de contact courant lors de la rotation de la vis de bridage 50, c'est-à-dire que le reste du flanc supérieur 55 constitue une pluralité de telles zones de contact, qui sont "éligibles" de façon mutuellement exclusive, c'est-à-dire qui vont, lors du vissage, successivement remplacer la zone de placage 55A courante. Le bridage de la plaquette de coupe 10 est ainsi assuré, le filetage 58F et le taraudage 40T servant au guidage de la vis de bridage 50 et, par frottement avec le filetage 58F, à son maintien en position de bridage.

Il convient de noter que, si l'axe de guidage 41 avait été prévu perpendiculaire à la surface de fond 32, c'est-à-dire si la tête de vis 52 ne se translatait pas latéralement, de par le vissage, vers la surface de siège 15A ici à gauche, la plaquette 10 devrait donc occuper, dès le début du vissage, une position latéralement décalée vers la surface de siège 15A, afin que tout le pourtour du flanc supérieur 55 ne vienne pas buter, lors du vissage, sur la totalité du pourtour de la paroi de flanc supérieur 15. L'axe de passage 11 devrait alors, en position fonctionnelle de la plaquette 10, occuper une position latéralement décalée par rapport à l'axe de guidage 41, comme l'évoque la figure 2 dans le cas d'axes obliques.

La figure 2 montre que, du côté opposé à la surface de siège 15A, donc ici à droite, la cavité 12 offre un jeu radial important par rapport à la tête de bridage 52, c'est-à-dire que, par rapport au volume de cavité réservé à la tête de bridage 52 en position d'appui léger, hors de toute contrainte de flexion, sur la surface de siège 15A, la cavité 12 comporte un évidement 12E situé radialement à l'opposé de la surface de siège 15A, et donc aussi de la zone de placage 55A, pour offrir un volume de flexion à la tête de bridage 52 lors de sa descente sur la surface de siège 15A.

Dans le cas d'une paroi latérale 33 qui, en vue en plan du logement 30, présenterait non pas une mais deux faces latérales mutuellement inclinées délimitant une arête verticale de coin de la surface de fond 32, pour mieux y cadrer la plaquette 10, l'axe de guidage 41 serait de préférence dirigé en descente sensiblement vers un prolongement de cette arête verticale, de façon à disposer de composantes de bridage vers les deux faces latérales.

En variante, la cavité 12 est à direction d'extension oblique par rapport à une normale à la face principale inférieure 2, de pose, l'axe de passage 11 étant par exemple confondu avec l'axe de guidage 41. En pareil cas, le gabarit de passage 12G peut être gauchi par rapport à la présente représentation pour que la surface de siège 15A forme une bande tronconique entourant totalement la cavité 12.

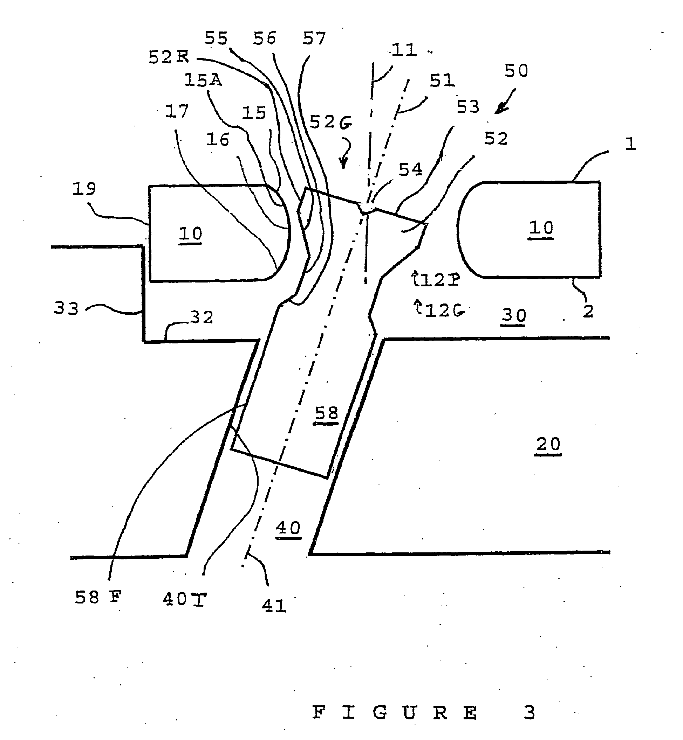

La figure 3 illustre la position de débridage de la plaquette 10. La vis de bridage 50 a été dévissée partiellement du trou de guidage 40, sur une longueur déterminée, de sorte que la plaquette 10 peut être manuellement remontée de même. Cette remontée de la tête de bridage 52, le long de la branche oblique du V représentée par l'axe de guidage 41, l'écarte donc de la paroi latérale 33 et ce desserrement de mâchoire permet de libérer totalement le flanc supérieur 15, c'est-à-dire libère aussi la surface de siège 15A correspondant à la position de bridage. Lors de la remontée manuelle de la plaquette 10 accompagnant la vis de bridage 50, par exemple en restant en appui latéral sur la paroi latérale 33, le contact de bridage de la plaquette 10 avec la zone de placage 55A glisse depuis la surface de siège 15A vers la paroi cylindrique 16 constituant un étranglement du passage 12P. Lorsque, par rapport à la paroi latérale 33, le flanc supérieur 55 se trouve éloigné d'au moins la distance entre le bord de gauche de la paroi cylindrique 16 et la face latérale 19, en appui sur la paroi latérale 33, la plaquette 10 peut donc poursuivre son mouvement de glissement ascendant sur la paroi latérale 33, et ainsi se dégager totalement, puisque le flanc supérieur 55 ne surplombe plus du tout la paroi de flanc supérieur 15 comportant la surface de siège 15A.

Comme le montre la figure 3, le gabarit de passage est tel que le bord de droite, inactif, du tronçon de paroi cylindrique 16 est suffisamment éloigné du bord de gauche, actif, pour que le bord de droite de la surface sommitale 53 de la tête de bridage 52 se trouve à l'intérieur du gabarit de passage ainsi défini, et permette donc la libération voulue. En effet, comme la tête de bridage 52 est ici cylindrique, donc à section axiale rectangulaire, et d'axe de vis 51 incliné sur l'axe de passage 11, la tête de bridage 52, ainsi disposée de travers, présente, vis-à-vis d'un mouvement de montée ici verticale de la plaquette de coupe 10, un gabarit d'encombrement 52G supérieur à celui correspondant à un cercle selon son diamètre, gabarit 52G atteignant sensiblement ici la valeur de diagonale du rectangle ci-dessus. Pour toutefois limiter la largeur nécessaire du tronçon de paroi cylindrique 16, il peut être prévu de faire basculer la plaquette de coupe 10 pour orienter l'axe de passage 11 selon sensiblement l'axe de 51. Ce basculement est possible dès que la plaquette de coupe 10 est, comme dessiné, quasiment sortie du logement 30, puisqu'il existe alors un jeu vis-à-vis de la vis de bridage 50. En variante, la paroi latérale 33 peut être non plus perpendiculaire au fond 32 mais évasée pour autoriser un tel pivotement.

Comme l'illustre le dessin, la cavité 12 n'est pas ici un trou borgne mais débouche aussi dans la face principale supérieure 1 pour qu'un tournevis de manoeuvre accède à la fente de manoeuvre 54 de la vis de bridage 50 par un passage supérieur, qui permet même le passage de la tête de bridage 52. En fait, comme illustré, l'axe de passage 11 traverse le centre des faces principales supérieure 1 et inférieure 2, et la cavité 12 présente une forme symétrique par rapport au dit plan médian, de sorte que la plaquette 10 est réversible et offre ainsi dix arêtes de coupe, la face principale dite supérieure 1 étant alors une face de pose.

De préférence comme ici, la surface de placage 55 n'est que partiellement tournée vers le tronçon de guidage 58 pour ainsi constituer une rampe apte à glisser sur la surface de siège 15A, axialement opposée par rapport à la direction de déplacement, selon les axes 41, 51, de la vis de bridage 50, et celle-ci est élastiquement flexible pour ainsi, lors de sa descente dans le passage 12P, emmagasiner une énergie.potentielle de flexion fournie en réaction, par effet de coin, par la surface de siège 15A en rampe. Comme la vis de bridage 50 fléchit vers le côté opposé à celui comportant la zone de placage 55A, et que ce côté opposé est, selon l'invention, non fonctionnel en ce qui concerne le bridage, il est donc facile de prévoir que le côté homologue de la cavité 12, latéralement opposé à la surface de siège 15A, soit à relativement grande distance du côté non fonctionnel de la vis de bridage 50, pour ainsi lui laisser un grand espace latéral pour la flexion ci-dessus de la tête de bridage 52 et du col 52C, en porte-à-faux vis-à-vis du trou de guidage 40. Compte tenu de cette possibilité d'obtenir une flexion importante du col 52C, la vis de bridage 50 peut être choisie en un matériau plus flexible que dans l'art antérieur, de sorte que, même si la vis de bridage 50 est enfoncée avec une force légèrement inférieure ou supérieure à celle spécifiée, elle remplira encore sa fonction de bridage, et ceci sans respectivement un risque de desserrage ou un risque de transmission de contrainte excessive à la plaquette 10 et à la fraise 20, susceptible de les dégrader.

Ainsi, la surface de placage 55 et la surface de siège 15A sont deux rampes respectives prévues pour un glissement mutuel lors du coulissement du coulisseau 50 entrant dans le trou de guidage 40, afin que le col 52C soit repoussé en flexion et qu'ainsi la tête de bridage 52 soit reçue dans l'évidement latéral 12E de la cavité 12, ménagé à cet effet du côté opposé à la surface de siège 15A.

La cavité 12 forme, avec l'évidement latéral 12E, un logement de largeur d'au moins 1,25 fois, de préférence 1,5 fois, et, de façon encore plus préférée, 2 fois, une valeur de largeur de la tête de bridage 52.

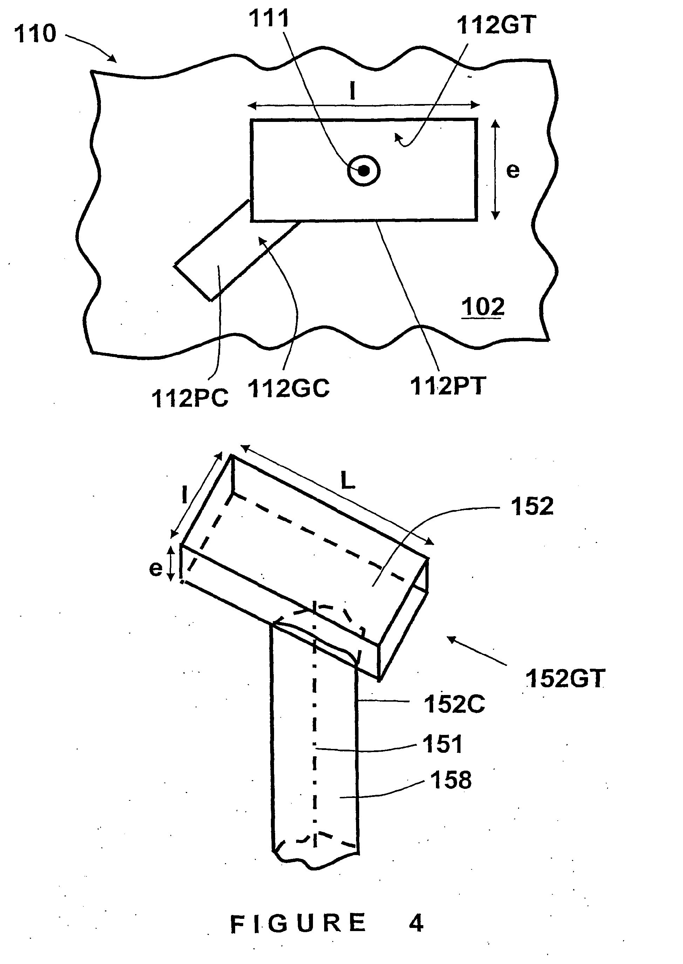

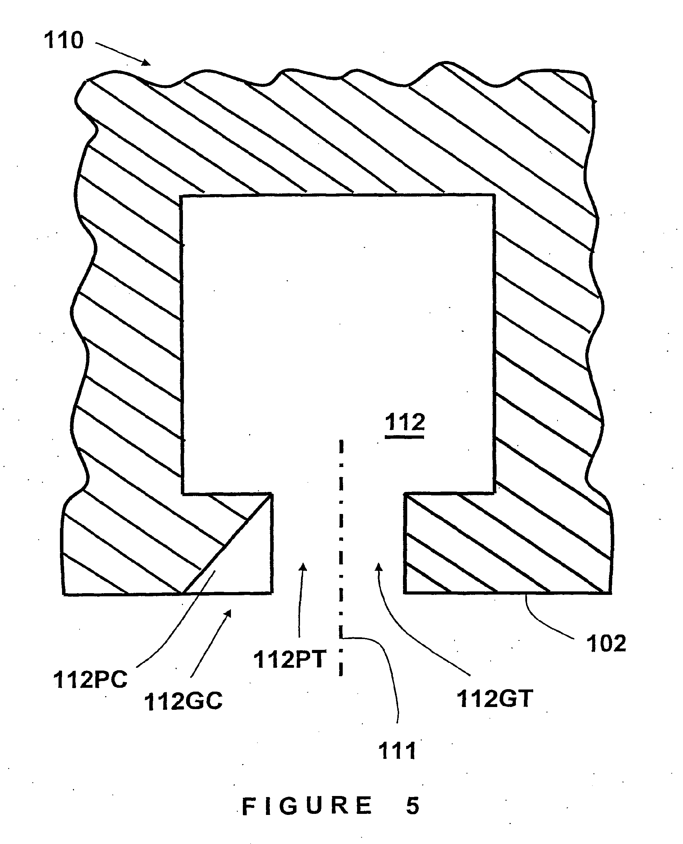

Les figures 4 et 5 illustrent schématiquement une variante dans laquelle le coulisseau est exempt de filetage d'entraînement. Les éléments fonctionnels homologues des autres figures en portent la même référence respective, précédée de la centaine "1". La plaquette est vue de dessous sur la figure 4, par sa face inférieure 102, présentant des passages, de tête 112PT et de col 112PC, aboutissant à une cavité 112 à un niveau intermédiaire dans son épaisseur. La figure 5 est une vue en coupe axiale selon le passage de tête 112PT.

Le passage global est donc double, avec le passage de tête 112PT, à gabarit 112GT, pour le passage de la tête de bridage 152 et éventuellement ensuite pour le logement du col 152C, associé à un gabarit de passage de col 112GC, pour le passage du col 152C. Pour la simplicité de l'exposé, le gabarit de passage de tête 112GT est ici rectangulaire, à côtés de tailles respectives 1 et e. Le passage de col 112PC correspond à un évasement en fente ménagé dans une zone limitée de pourtour du passage de tête 112PT.

La tête de bridage 152 du coulisseau 150, en forme de parallélépipède rectangle, de longueur L, largeur 1 et épaisseur e, ne peut donc traverser le passage de tête 112PT qu'en présentant l'orientation voulue selon trois directions d'orientation spatiale, c'est-à-dire avec ses côtés de longueur L alignés selon l'axe de passage 111 (fixant ainsi 2 degrés de liberté en rotation), pour que l'une de ses petites faces, de bout, de taille 1 x e, ayant un gabarit d'encombrement compatible avec le gabarit de tête 112GT, puisse être présentée devant le passage 112T. Une rotation finale (troisième degré de liberté en rotation) autour d'une direction parallèle à l'axe de passage 111 permet de cadrer correctement la tête de bridage 152 devant le passage de tête 112PT et le col 152C devant le passage de col 112PC.

Le col 152C est relié de façon oblique à la tête de bridage 152, c'est-à-dire que, partant de la tête de bridage 152, le col 152C traverse un plan virtuel dans lequel s'étend celle des faces de bout qui sera introduite la dernière, à droite sur la figure 4, et rejoint le corps de coulisseau 158. Le gabarit de passage de col 112GC présente la largeur et l'angle d'évasement voulus pour que le col 152C puisse amener la tête de bridage 152 dans le logement 112 et l'y faire tourner dans une direction quelconque. Il peut donc s'agir d'un pivotement final du col 152C depuis le bord évasé, de gauche, du passage annexe 112PC vers ou dans le passage de tête 112PT, ou bien d'une rotation du col 152C et de la tête de bridage 152 autour de l'axe 151 du col 152C, Il peut aussi être prévu que le passage de col 112PC constitue aussi une fente au niveau même de la cavité 112, pour ainsi pouvoir translater radialement la tête de la bridage 152 vers un bord latéral de la cavité 112, qui constitue ainsi un tunnel, comme évoqué au début.

La tête de bridage 152 constitue ainsi une sorte de rotule, à mouvement relatif de pivotement dans la cavité 112, et ce pivotement modifie le gabarit d'encombrement 152GT de la tête 152, par rapport à la direction de passage 111, pour l'adapter ou non au gabarit de passage de tête 112GT et ainsi libérer ou bloquer la tête 152 et donc la plaquette 110.

Bien évidemment, la forme parallélépipédique rectangle ci-dessus de la tête de bridage 152 n'est qu'un exemple. On peut en particulier songer à une forme sensiblement d'ellipsoïde aplati et à un gabarit de passage de tête 112PT de même taille débouchant sur une cavité par exemple sphérique permettant ainsi d'emprisonner la rotule par rotation relative autour de l'axe de passage 111.

En ce qui concerne le vissage parasite dû aux cycles thermiques, détecté par le présent inventeur, il est proposé ci-après une explication, en référence aux figures 1 à 3.

La vis de bridage 50 étant d'abord vissée fermement, les flancs supérieurs 58S, 59S et autres, de ses filets 58G, 59G et autres, se trouvent ainsi en appui sur les flancs supérieurs 48S, 49S et autres, les surplombant, des rainures 48, 49 et autres, du taraudage 40T. Lors de l'échauffement, la vis de bridage 50 tend en particulier à s'allonger, de sorte que les flancs supérieurs 59S des filets 59G de son tronçon d'extrémité libre 58E se décollent du flanc supérieur 49S de la rainure 49 en regard et descendent, en direction purement axiale, plus profondément dans le trou de guidage 40, jusqu'à venir buter contre le flanc inférieur 49I de rainure correspondant. La dilatation axiale étant alors bloquée par les flancs inférieurs 491 de rainure, la force de dilatation purement axiale de la vis de bridage 50 s'exerce de façon croissante sur ceux-ci. Comme les flancs inférieurs 49I constituent une rampe hélicoïdale, le tronçon d'extrémité libre 58E est ainsi chassé en torsion, c'est-à-dire poursuit sa descente, mais alors hélicoïdalement, dans le trou de guidage 40. Les vibrations liées au fonctionnement de la fraise 20 ne peuvent que contribuer à libérer l'arc-boutement contre les flancs inférieurs 49I de rainure, de sorte que les filets 59G du tronçon d'extrémité libre 58E parviennent, par saccades avec les vibrations, à glisser sur le flanc inférieur opposé 59I de rainure, de butée basse.

Après arrêt de la fraise 20, celle-ci, qui servait de radiateur grâce à sa surface notable, se refroidit plus vite que la plaquette 10, de sorte que les filets 59G du tronçon d'extrémité libre 58E, en fond de trou, les plus éloignés de la tête de bridage 52, qui était la source de chaleur, tendent rapidement à reprendre leur forme de repos, c'est-à-dire se contractent en particulier axialement. Compte tenu du fait que l'onde de refroidissement ne se propage que progressivement vers la tête de bridage 52, les filets 59G à divers niveaux du tronçon d'extrémité libre 58E présentent des retards mutuels pour leur retour à une valeur nominale de pas axial. Il s'en suit un effet de modulation de la valeur locale du pas axial de filetage en fonction de la position axiale considérée, qui se traduit par un pincement axial du taraudage 40T. En effet, ceux des filets 59G qui sont situés tout en extrémité du tronçon d'extrémité libre 58E constituent une mâchoire remontée près ou contre le flanc supérieur 49S de rainure associé, alors que ceux des filets 59G du tronçon d'extrémité libre 58E qui sont plus proches de la tête de bridage 52 sont encore en butée contre le flanc inférieur 49I de rainure associé.

Le tronçon d'extrémité libre 58E, pinçant ainsi un tronçon du taraudage 40T, ne se dévissera donc pas pour reprendre sa position d'origine. Le tronçon supérieur 58T ne peut pas être moteur à cet effet car le filet sommital 58G (qui est théoriquement, de par la dilatation axiale lors de l'échauffement, le seul qui ait maintenu un appui avec le flanc supérieur 48S de rainure associé) n'a alors qu'un contact sous pression insuffisante avec le flanc supérieur 48S. Comme, d'une part, le tronçon d'extrémité libre 58E est ainsi axialement ancré plus profondément que voulu, et que, d'autre part, le tronçon supérieur 58T, commence à se refroidir, ce dernier se contracte axialement. Comme le tronçon supérieur 58T est porté par le tronçon d'extrémité libre 58E, la contraction ci-dessus s'effectue en descente, vers le tronçon d'extrémité libre 58E, de sorte que le flanc supérieur 58S du filet sommital 58G du tronçon supérieur 58T perd temporairement son appui haut. Cet appui, qui servait au bridage de la plaquette 10, en direction axiale, empêchait aussi, de par le coefficient de frottement sur le filet supérieur 48S, toute rotation. Cet appui haut du tronçon supérieur 58T ayant disparu, ou étant réduit, le tronçon supérieur 58T peut donc reprendre sa forme de repos, à froid. L'extrémité inférieure du tronçon supérieur 58T étant portée solidaire par une extrémité supérieure, "porteuse", du tronçon d'extrémité libre 58E, ancré, le tronçon supérieur 58T va donc reprendre sa forme de repos, à froid, par, à la fois, la contraction axiale et aussi un vissage d'un angle égal à celui dont a initialement tourné, par dilatation, l'extrémité supérieure, "porteuse", du tronçon d'extrémité libre 58E.

L'extrémité supérieure du tronçon d'extrémité libre 58E est en fait quelque peu virtuelle, car elle est de position axiale variable et éventuellement évolutive, puisqu'il s'agit du niveau axial où se produit l'appui ou accrochage des flancs inférieurs 59I sur les flancs inférieurs 49I de rainure, et ce niveau dépend de l'évolution de la température et, en outre, des disparités du coefficient de frottement entre les diverses surfaces élémentaires en contact peuvent intervenir. Finalement, l'ancrage du tronçon d'extrémité libre 48E disparaissant avec son refroidissement total, ses deux extrémités, supérieure et inférieure, peuvent se rapprocher l'une de l'autre, avec léger dévissage de l'extrémité inférieure et léger vissage de l'extrémité supérieure et donc aussi de la tête de bridage 52, à l'encontre de la composante axiale de la force de réaction de la surface de siège 15A.

En bref, la vis de bridage 50 progresse, selon le trajet hélicoïdal du taraudage 40T, à la façon d'une chenille, dont un tronçon avant (58 E) s'allonge et se fixe au sol, pour ensuite attirer un tronçon arrière (58T).

Pour maintenir un serrage optimal lorsque la plaquette 10 monte en température, la surface de placage 55 et la surface de siège 15A en rampe sont orientées, comme le montre la figure 2, en position de bridage, selon une direction coupant l'axe de vis 51 au point axial 58A du plan 58P situé au niveau du filet sommital 58G, de sommet du tronçon de guidage 58.

En effet, comme la vis de bridage 50, en acier, se dilate plus que la plaquette 10, en carbure, et comme le tronçon de guidage 58 est, quant à lui, prisonnier axialement, le plan radial 58P de sommet de celui-ci est en fait le seul qui, à chaud, soit fixe par rapport au logement 30. En effet, comme exposé ci-dessus, le tronçon de guidage 58 va se dilater et descendre dans le trou de guidage 40 en prenant appui, sur le taraudage 40T, par le flanc supérieur 58S. C'est donc le filet sommital 58G qui détermine, à l'inclinaison près de son vrillage propre, la position du plan radial 58P, fixe. La partie externe de la vis de bridage 50, formée par le col 52C et la tête de bridage 52, vont donc tendre à se dilater de façon isotrope par rapport au point axial 58A, c'est-à-dire occuper une position homothétique de la position à froid. Comme, selon la caractéristique préconisée, les rampes ci-dessus sont orientées selon la direction locale d'homothétie, la surface de placage 55 glisse ainsi sur la surface de siège 15A, sans, d'une part, s'en écarter, évitant donc tout débridage, et sans, d'autre part, augmenter la pression d'appui.

## Revendications

1. Ensemble à bridage, comportant une plaquette de coupe (10) et un dispositif (40, 50)de bridage de la plaquette contre une surface de pose (32) ménagée sur un porte-outil (20), le dispositif (40, 50) comportant un coulisseau (50) comprenant un tronçon de guidage (58) prévu pour être monté coulissant dans un trou de guidage (40) ménagé dans la surface de pose (32) et un tronçon de bridage.(52 à 57) comprenant une tête de bridage (52, 55) comportant un relief latéral de bridage (52R) de forme agencée pour présenter une surface de placage (55, 55A), au moins partiellement tournée vers le tronçon de guidage (58), pour buter contre une surface de siège (15A) opposée, associée à une cavité (12) de la plaquette (10) débouchant dans au moins une face de pose (2) de la plaquette (10) et agencée pour loger le tronçon de bridage (52 à 57), afin de plaquer la plaquette (10) sur la surface de pose (32) lorsque la plaquette (10) et le coulisseau (50) sont mutuellement disposés selon une position mutuellement relative de bridage, la cavité (12) de la plaquette (10) présentant un gabarit de passage (12G), le long d'un passage (12P) d'accès pour la tête (52, 55, 55A) depuis la face de pose (2) jusqu'à la surface de siège (15A), associée exclusivement à un seul côté de la cavité (12), le gabarit de passage (12G) variant selon une forme adaptée, par rapport à un gabarit d'encombrement (52G) du relief latéral de bridage (52R), pour que le gabarit de passage (12G) soit incompatible avec le gabarit d'encombrement (52G) lorsque la plaquette (10) et le coulisseau (50) sont disposés selon la dite position mutuellement relative de bridage, et de forme adaptée pour que le gabarit de passage (12G) soit compatible avec le gabarit d'encombrement (52G) lorsque la plaquette (10) et le coulisseau (50) sont disposés selon au moins une autre position mutuellement relative, de libération de la plaquette (10), ensemble **caractérisé en ce que** le trou de guidage (40) s'enfonce depuis la surface de pose (32) dans le porte-outil selon une direction d'extension dirigée en oblique vers un plan d'extension d'une paroi latérale (33) laquelle paroi latérale limite la surface de pose (32), **en ce que** la cavité (12) de la plaquette (10) présente une forme symétrique par rapport à un plan médian à mi-épaisseur de la plaquette, **en ce que** la cavité (12) débouche aussi, par un autre passage ayant le dit gabarit de passage, dans une face (1) opposée à la dite face de pose (2) et **en ce que** la cavité (12) comporte une autre surface de siège pour brider la plaquette (10) réversible en position retournée.

2. Ensemble selon la revendication 1, dans lequel le gabarit de passage (12G) et le gabarit d'encombrement (52G) sont agencés pour que la dite autre position mutuellement relative soit atteinte par un basculement de la plaquette (10) relativement au coulisseau (50).

3. Ensemble selon l'une des revendications 1 et 2, dans lequel le gabarit de passage (12G) et le gabarit d'encombrement (52G) sont agencés pour que la dite autre position mutuellement relative soit atteinte par une rotation relative de la plaquette (10), par rapport au coulisseau (50), dans un plan sensiblement parallèle à la face de pose (2).

4. Ensemble selon la revendication 3, dans lequel un relief latéral (58F), d'entraînement du coulisseau (50), et un relief complémentaire (40T) du porte-outil (20) sont agencés pour que, par remontée partielle du coulisseau (50) d'au moins une hauteur déterminée par rapport au trou de guidage (40), le coulisseau (50) pivote sur lui-même d'un certain angle qui amène le gabarit d'encombrement (52G) en une orientation le rendant compatible avec le gabarit de passage (12G).

5. Ensemble selon l'une des revendications 1 à 4, dans lequel le gabarit de passage (12G) et le gabarit d'encombrement (52G) sont agencés pour que la dite position de libération soit atteinte par une translation de la plaquette (10), relativement au coulisseau (50), dans un plan parallèle à la surface de pose (32).

6. Ensemble selon l'une des revendications 1 à 5, dans lequel la surface de siège (15A) s'étend sur un arc de pourtour partiel du passage de la cavité (12).

7. Ensemble selon l'une quelconque des revendications 1 à 6, dans lequel la paroi latérale (33) s'étend globalement en oblique de façon évasée par rapport à une normale à la surface de pose (32).

8. Ensemble selon l'une des revendications 1 à 7, dans lequel le trou de guidage (40) et le coulisseau (50) s'étendent en arc de cercle.

9. Ensemble selon l'une des revendications 1 à 8, dans lequel le gabarit de passage (12G) comporte un tronçon d'étranglement (16).

10. Ensemble selon l'une des revendications 1 à 9, dans lequel le gabarit de passage (12G) comporte un tronçon d'élargissement.

11. Ensemble selon l'une des revendications 1 a 10, dans lequel le tronçon de guidage (58) comporte des moyens de commande d'entraînement (58F).

12. Ensemble selon l'une des revendications 1 à 11, dans lequel le tronçon de guidage (58) comporte un relief latéral (58F), de blocage du coulisseau (50) en position de bridage, agencé pour coopérer avec un relief complémentaire (40T) du porte-outil (20).

13. Ensemble selon la revendication 12, dans lequel le relief latéral (58F) de blocage du coulisseau (50) en position de bridage est une encoche latérale agencée pour recevoir une extrémité, de commande de manoeuvre et de blocage en position, d'une vis de manoeuvre montée dans un trou taraudé et agencée pour enfoncer le coulisseau (50) dans le trou de guidage (40) par appui sur un flanc de l'encoche.

14. Ensemble selon l'une des revendications 1 à 13, dans lequel la surface de placage (55, 55A) et la surface de siège (15A) sont deux rampes respectives prévues pour un glissement mutuel lors du coulissement du coulisseau (50) entrant dans le trou de guidage (40), afin qu'un tronçon de col (52) du coulisseau (50), portant la tête de bridage (52, 55, 55A), soit repoussé en flexion et que la tête de bridage (52, 55, 55A) soit reçue dans un évidement latéral (12E) de la cavité (12), ménagé à cet effet d'un côté opposé à la surface de siège (15A).

15. Ensemble selon la revendication 14, dans lequel la cavité forme, avec l'évidement latéral (12E), un logement de largeur de largeur d'au moins 1,25 fois, de préférence 1,5 fois, et de façon plus préférée 2 fois, une valeur de largeur de la tête de bridage (52, 55, 55A).

16. Ensemble selon l'une des revendications 14 et 15, dans lequel la surface de placage (55, 55A) et la surface de siège (15A) en rampe sont orientées, en position de bridage, selon une direction coupant un axe longitudinal virtuel (51) du coulisseau (50) en un point axial situé sensiblement dans une surface radiale virtuelle de sommet du tronçon de guidage (58), portant la tête de bridage (52, 55, 55A).

17. Ensemble selon l'une quelconque des revendications 1 à 16, dans lequel la tête de bridage est cylindrique.

## Claims

1. Clamping assembly, comprising a cutting insert (10) and a device (40, 50) for clamping the insert against a bearing surface (32) formed on a tool holder (20), the device (40, 50) comprising a slide (50) including a guiding segment (58) intended to be slidably mounted in a guide hole (40) provided in the bearing surface (32), and a clamping segment (52 to 57) including a clamping head (52, 55) which includes a clamping lateral relief (52R) with such a shape that it has a clamping contact surface (55, 55A), at least partially turned toward the guide segment (58), so as to abut an opposite seat surface (15A), associated with a cavity (12) in the insert (10) leading to at least one bearing face (2) of the insert (10) and arranged so as to house the clamping segment (52 to 57), so as to clamp the insert (10) against the bearing surface (32) when the insert (10) and the slide (50) are mutually arranged in a mutually clamping position whereby the cavity (12) of the insert (10) has passage template (12G), along an access passage (12P) for passing the head (52, 55, 55A) from the bearing face (2) to the seat surface (15A), associated exclusively to one side of the cavity (12), the passage template (12G) varying according to a suitable shape with respect to a bulk template (52G) of the clamping lateral relief (52R), so that the passage template (12G) is incompatible with the bulk template (52G) when the insert (10) and the slide (50) are arranged in said mutually relative clamping position, and of a suitable shape so that the passage template (12G) is compatible with the bulk template (52G) when the insert (10) and the slide (50) are arranged in at least one other mutually relative position, for release of the insert (10), the assembly being **characterised in that** the guide hole (40) penetrates from the bearing surface (32) into the tool holder in a direction of extension directed obliquely toward a plane of extension of a side wall (33), which side wall limiting the bearing surface (32), **in that** the cavity (12) of the insert (10) has a shape symmetrical with respect to a median plane at mid-thickness of the insert, **in that** the cavity (12) also leads, through another passage that has said passage template, to a face (1) opposite to said bearing face (2) and **in that** the cavity (12) has another seat surface to clamp the reversible insert (10) in an inverted position.

2. Assembly according to claim 1, wherein the passage template (12G) and the bulk template (52G) are arranged so that the said other mutually relative position is reached by a tilting of the insert (10) relative to the slide (50).

3. Assembly according to one of claims 1 and 2, in which the passage template (12G) and the bulk template (52G) are arranged so that the said other mutually relative position is reached by a relative rotation of the insert (10) relative to the slide (50), in a plane substantially parallel to the bearing face (2).

4. Assembly according to claim 3, in which a lateral relief (58F), for driving the slide (50), and a complementary relief (40T) of the tool holder (20) are arranged so that, by partially lifting of the slide (50) by at least a given height with respect to the guide hole (40), the slide (50) pivots over itself by a certain angle which brings the bulk template (52G) to an orientation making it compatible with the passage template (12G).

5. Assembly according to one of claims 1 to 4, in which the passage template (12G) and the bulk template (52G) are arranged so that the said release position is reached by a translation of the insert (10), relative to the slide (50), in a plane parallel to the bearing surface (32).

6. Assembly according to one of claims 1 to 5, in which the seat surface (15A) extends over a partial peripheral arc of the passage of the cavity (12).

7. Assembly according to any one of claims 1 to 6, in which the side wall (33) extends generally oblique, flared manner with respect to a normal to the bearing surface (32).

8. Assembly according to one of claims 1 to 7, in which the guide hole (40) and the slide (50) extend in an arc of a circle.

9. Assembly according to one of claims 1 to 8, in which the passage template (12G) includes a constricted segment (16).

10. Assembly according to one of claims 1 to 9, in which the passage template (12G) includes an enlargement segment.

11. Assembly according to one of claims 1 to 10, in which the guide segment (58) comprises drive control means (58F).

12. Assembly according to one of claims 1 to 11, in which the guide segment (58) comprises a lateral relief (58F), for locking the slide (50) in the clamping position, arranged so as to cooperate with a complementary relief (40T) on the tool holder (20).

13. Assembly according to claim 12, in which the lateral relief (58F) for locking the slide (50) in the clamping position is a lateral notch arranged to receive an end, for maneuvering control and position locking, of a maneuvering screw mounted in a threaded hole and arranged to push the slide (50) into the guide hole (40) by contact with a flank of the notch.

14. Assembly according to one of claims 1 to 13, in which the clamping contact surface (55, 55A) and the seat surface (15A) are two respective ramps arranged for a mutual sliding during the sliding of the slide (50) entering the guide hole (40), so that a neck segment (52) of the slide (50), bearing the clamping head (52, 55, 55A) is bent back and the clamping head (52, 55 , 55A) is received in a lateral recess (12E) of the cavity (12), provided for this purpose on a side opposite the seat surface (15A).

15. Assembly according to claim 14, in which the cavity forms, with the lateral recess (12E), a housing of width at least 1.25 times, preferably 1.5 times, and more preferably twice, a value of the width of the clamping head (52, 55, 55A).

16. Assembly according to one of claims 14 and 15, in which the clamping contact surface (55, 55A) and the seat surface (15A) forming a ramp are oriented, in the clamping position, in a direction cutting a virtual longitudinal axis (51) of the slide (50) at an axial point located substantially in a virtual radial surface of the apex of the guide segment (58), bearing the clamping head (52, 55, 55A).

17. Assembly according to any one of claims 1 to 16, in which the clamping head is cylindrical.

## Patentansprüche

1. Flanscheinheit, umfassend eine Schneidplatte (10) und eine Vorrichtung (40, 50) zum Flanschen der Platte gegen eine auf einem Werkzeugträger (20) angeordnete Legenfläche (32), wobei die Vorrichtung (40, 50) einen Schieber (50) aufweist, umfassend einen Führungsabschnitt (58), der dazu vorgesehen ist, gleitend in einem in der Legenfläche (32) angeordneten Führungsloch (40) montiert zu werden, und einen Flanschabschnitt (52 bis 57), umfassend einen Flanschkopf (52, 55) mit einem seitlichen Flanschrelief (52R) von zusammengestellter Form, um eine Auflagefläche (55, 55A) aufzuweisen, die zumindest teilweise zum Führungsabschnitt (58) gewandt ist, um an einer gegenüber liegenden Sitzfläche (15A) anzustoßen, die mit einem Hohlraum (12) der Platte (10) verbunden ist, der in mindestens eine Legenflank (2) der Platte (10) mündet und derart zusammengestellt ist, dass er den Flanschabschnitt (52 bis 57) aufnimmt, um die Platte (10) an die Legenfläche (32) aufzuliegen, wenn die Platte (10) und der Schieber (50) wechselseitig in einer wechselseitig relativen Flanschposition aufgestellt sind, wobei der Hohlraum(12) der Platte (10) ein Durchgangsprofil (12G) entlang einer Zuführung (12P) für den Kopf (52, 55, 55A) von der Legenflank (2) bis zur Sitzfläche (15A) aufweist, der ausschließlich mit nur einer Seite des Hohlraums (12) verbunden ist, wobei das Durchgangsprofil (12G) gemäß einer entsprechenden Form in Bezug zu einem Platzprofil (52G) des seitlichen Flanschreliefs (52R) variiert, damit das Durchgangsprofil (12G) mit dem Platzprofil (52G) nicht vereinbar ist, wenn die Platte (10) und der Schieber (50) gemäß der wechselseitig relativen Flanschposition aufgestellt sind, und eine entsprechende Form aufweist, damit das Durchgangsprofil (12G) mit dem Platzprofil (52G) vereinbar ist, wenn die Platte (10) und der Gleitschieber (50) gemäß mindestens einer weiteren wechselseitig relativen Position zur Freigabe der Platte (10) aufgestellt sind, wobei die Einheit **dadurch gekennzeichnet ist, dass** das Führungsloch (40) von der Legenfläche (32) in dem Werkzeugträger in eine Ausdehnungsrichtung, die schräg zu einer Ausdehnungsebene einer Seitenwand (33) ausgerichtet ist, versenkt wird, wobei die Seitenfläche die Legenfläche (32) begrenzt, dass der Hohlraum (12) der Platte (10) eine zu einer Mittelebene auf halber Dicke der Platte symmetrische Form aufweist, dass der Hohlraum (12) durch einen weiteren Durchgang, der das Durchgangsprofil aufweist, in eine Fläche (1) mündet, die der Legenflank (2) gegenüber liegt, und dass der Hohlraum (12) eine weitere Sitzfläche umfasst, um die umkehrbare Platte (10) in umgedrehter Position anzuflanschen.

2. Einheit nach Anspruch 1, bei der das Durchgangsprofil (12G) und das Platzprofil (52G) derart zusammengestellt sind, dass die andere wechselseitig relative Position durch ein Kippen der Platte (10) relativ zum Schieber (50) erreicht wird.

3. Einheit nach einem der Ansprüche 1 und 2, bei der das Durchgangsprofil (12G) und das Platzprofil (52G) derart zusammengestellt sind, dass die andere wechselseitig relative Position durch eine relative Drehung der Platte (10) in Bezug zum Schieber (50) in einer im Wesentlichen zur Legenflank (2) parallelen Ebene erreicht wird.

4. Einheit nach Anspruch 3, bei der ein seitliches Relief (58F) für den Antrieb des Schiebers (50) und ein komplementäres Relief (40T) des Werkzeugträgers (20) derart zusammengestellt sind, dass durch teilweises Hochfahren des Schiebers (50) um mindestens eine bestimmte Höhe in Bezug zum Führungsloch (40) der Schieber (50) um sich selbst um einen gewissen Winkel schwenkt, der das Platzprofil (52G) in eine Ausrichtung bringt, die es mit dem Durchgangsprofil (12G) vereinbar machen.

5. Einheit nach einem der Ansprüche 1 bis 4, bei der das Durchgangsprofil (12G) und das Platzprofil (52G) derart zusammengestellt sind, dass die Freigabeposition durch eine Translation der Platte (10) relativ zum Schieber (50) in einer Ebene parallel zur Legenfläche (32) erreicht wird.

6. Einheit nach einem der Ansprüche 1 bis 5, bei der sich die Sitzfläche (15A) auf einem teilweisen Umfangsbogen des Durchgangs des Hohlraums (12) dehnt.

7. Einheit nach irgendem der Ansprüche 1 bis 6, bei der sich die Seitenwand (33) global schräg erweiternd in Bezug zu einer Normalen zur Legenfläche (32) dehnt.

8. Einheit nach einem der Ansprüche 1 bis 7, bei der sich das Führungsloch (40) und der Schieber (50) kreisbogenförmig dehnen.

9. Einheit nach einem der Ansprüche 1 bis 8, bei der das Durchgangsprofil (12G) einen Verengungsabschnitt (16) aufweist.

10. Einheit nach einem der Ansprüche 1 bis 9, bei der das Durchgangsprofil (12G) einen Erweiterungsabschnitt aufweist.

11. Einheit nach einem der Ansprüche 1 bis 10, bei der der Führungsabschnitt (58) Antriebssteuerungsmittel (58F) aufweist.

12. Einheit nach einem der Ansprüche 1 bis 11, bei der der Führungsabschnitt (58) ein seitliches Relief (58F) zur Feststellung des Schiebers (50) in Flanschposition aufweist, das derart zusammengestellt ist, dass es mit einem komplementären Relief (40T) des Werkzeugträgers (20) zusammenwirkt.

13. Einheit nach Anspruch 12, bei der das seitliche Relief (58F) zur Feststellung des Schiebers (50) in Flanschposition eine seitliche Kerbe ist, die derart zusammengestellt ist, dass sie ein Ende einer Steuerschraube zur Betätigungssteuerung und Positionsfeststellung bekommt, die in einen Gewindeloch montiert und derart zusammengestellt ist, dass sie den Schieber (50) in das Führungsloch (40) durch Stütze auf eine Seite der Kerbe versenkt.

14. Einheit nach einem der Ansprüche 1 bis 13, bei der die Auflagefläche (55, 55A) und die Sitzfläche (15A) zwei jeweilige Rampen sind, die dazu vorgesehen sind, beim Schieben des Schiebers (50), der in das Führungsloch (40) eintritt, zueinander zu gleiten, damit ein Halsabschnitt (52) des Schiebers (50), der den Flanschkopf (52, 55, 55A) trägt, in Biegung zurückgeschoben wird und der Flanschkopf (52, 55, 55A) in einer seitlichen Aussparung (12E) des Hohlraums (12) bekommen wird, der zu diesem Zweck auf einer der Sitzfläche (15A) gegenüber liegenden Seite vorgesehen ist.

15. Einheit nach Anspruch 14, bei der der Hohlraum mit der seitlichen Aussparung (12E) ein Aufnehmen bildet, der eine Breite aufweist, die mindestens 1,25-mal, vorzugsweise 1,5-mal, und auf noch bevorzugtere Weise 2-mal einen Breitenwert des Flanschkopfes (52, 55, 55A) aufweist.

16. Einheit nach einem der Ansprüche 14 und 15, bei der die Auflagefläche (55, 55A) und die Sitzfläche (15A) in Rampenform in Flanschposition in eine Richtung ausgerichtet sind, die eine virtuelle Längsachse (51) des Schiebers (50) an einem axialen Punkt schneidet, der im Wesentlichen in einer virtuellen radialen Fläche an der Spitze des Führungsabschnitts (58), die den Flanschkopf (52, 55, 55A) trägt, eingeordnet ist.

17. Einheit nach irgendem der Ansprüche 1 bis 16, bei der der Flanschkopf zylindrisch ist.
